# EUROPÄISCHE PATENTSCHRIFT

(11) **EP 2 230 127 B1**
(45) Veröffentlichungstag und Bekanntmachung des Hinweises auf die Patenterteilung: **02.10.2013**
(21) Anmeldenummer: 10002058.5
(22) Anmeldetag: 01.03.2010
(51) Int. Cl.: B60P 7/08, A44B 11/12

(54) **Spannratsche zum Aufwickeln und Spannen eines Spanngurtes**
Ratchet tensioner for coiling and tensioning a tension belt
Tendeur cliquet destiné à embobiner et tendre une sangle

(30) Priorität: 16.03.2009 DE 202009003587 U
(43) Veröffentlichungstag der Anmeldung: 22.09.2010
(73) Patentinhaber: Braun GmbH, 92318 Neumarkt-Pölling (DE)
(72) Erfinder: Braun, Günther, 92318 Neumarkt-Pölling (DE)
(74) Vertreter: Hafner, Dieter

(56) Entgegenhaltungen:
- EP-A2- 0 369 698
- DE-U1- 8 014 360
- DE-U1- 9 014 602

## Beschreibung

Die Erfindung betrifft eine Spannratsche zum Aufwickeln und Spannen eines Spanngurtes, insbesondere zur Ladungsverzurrung und dergleichen oder einer bandartigen Slackline, die als Sportgerät eingesetzt werden kann. Derartige bandartige Elemente müssen, um ihre Funktion z.B. zur Ladungsverzurrung oder zum Ausüben einer Balanceübung straff zwischen zwei Fixpunkten gespannt werden, wozu in der Regel Spannratschen verwendet werden. Spannratschen weisen zwischen zwei Seitenteilen eine Wickelwelle auf, die durch einen Hebel mit Handkraft über ein Freilaufgesperre verdreht werden kann, wobei die Drehbewegung der Wickelwelle gegen die Aufwickelrichtung des Gurtes durch ein Federrastgesperre blockiert ist.

Es ist bereits bekannt geworden, auf die Wickelwelle einer Spannratsche beidseitig so genannte Adaptionsscheiben oder Spacer aufzusetzen, um die Wickelbreite einer Wickelwelle an unterschiedlich breite Gurte anzupassen, die auf der Wickelwelle aufgerollt werden sollen. Gängig sind z.B. Gurte mit einer Breite von 25, 35 und 50 mm. Es ist so gut wie nicht möglich, einen Gurt mit einer geringeren Breite sauber auf einer Wickelwelle größerer Breite aufzurollen, ohne dass es infolge eines Abrutschens einer Gurtwicklung von bereits aufgewickelten Gurtbereichen zu seitlichen Verklemmungen des Gurtes auf der Wickelwelle kommt. Dies hat zur Folge, dass der aufgewickelte Gurt die Wickelwelle verklemmt und sowohl ein weiteres Aufwickeln infolge der Spannratschenbetätigung als auch ein Abwickeln des bereits aufgewickelten Gurtes mit großen Schwierigkeiten verbunden ist. Meist erleidet das Gurtband einen Schaden.

Herkömmliche Spacer oder Adaptionsscheiben, wie beispielsweise aus der EP 0 369 698 bekannt, können in der Regel nur auf der Wickelwelle einer zerlegten Spannratsche montiert werden.

Der Erfindung liegt die Aufgabe zugrunde, eine Spannratsche derart weiterzubilden, dass sie ohne großen Montageaufwand für unterschiedliche Gurtbreiten einsetzbar ist.

Weiterhin betrifft die Erfindung eine mehrteilige Adaptionsscheibe zur Verwendung in einer Spannratsche, wobei die Aufgabenstellung diesbezüglich darin besteht, den Montageaufwand der Adaptionsscheibe auf einer Wickelwelle zu reduzieren.

Diese Aufgabe wird durch die kennzeichnenden Merkmale des Anspruches 1 ebenso wie durch die Merkmalskombination des Anspruches 20 gelöst, vorteilhafte Weiterbildungen der Erfindung hinsichtlich der Spannratsche finden sich in den Unteransprüchen 2 - 19.

Als Kern der Erfindung wird es insbesondere angesehen, die Adaptionsscheiben mehrteilig auszubilden und im Bereich wenigstens einer Trennfuge mit wenigstens einem in wenigstens eines der aneinander angelegten Adaptionsscheibenteile eingreifenden Verbindungselement versehen sind.

Die Erfindung geht dabei von einer wenigstens zweiteiligen Adaptionsscheibe aus, die in Form zweier Halbscheiben ausgebildet sind. Die beiden Trennfugen durchsetzen dabei die Adaptionsscheibenteile mittig. Es sind aber auch mehrteilige, d.h. drei- oder vierteilige Adaptionsscheiben möglich, wobei allerdings davon auszugehen ist, dass diese schwieriger zu montieren sind. Zusammengehalten werden die jeweiligen Adaptionsscheibenteile durch das Verbindungselement, das z.B. eine Verschraubung sein kann, wobei die Schraubenelemente der Verschraubung in der Scheibenebene verlaufen. Es ist aber auch möglich, die Verbindungselemente z.B. als Nut- und Federelemente auszubilden, d.h. an einer Seite der Trennfuge ist ein Nutelement angeordnet, in das ein Federelement der anderen Hälfte eingreift. Ebenso sind Keilverbindungen oder Formstifte möglich. Sind die Verbindungselemente so ausgebildet, dass sie keinen gegenseitigen Anzug der Adaptionsscheibenteile ermöglichen, wie das beispielsweise durch eine Verschraubung möglich ist, dann kann eine Federklammer vorgesehen werden, die die Adaptionsscheibenteile, die durch die Verbindungselemente dann bereits vorfixiert sind, in Endposition hält. Die Federklammer kann einen im Wesentlichen zylindrischen Abschnitt an der Peripherie der Adaptionsscheiben angeordnet sein und in einer umlaufenden Sicke einliegen.

Auf ihrer dem Gurt in Endmontagestellung abgewandten Außenseite sind die Adaptionsscheiben oder Adaptionsscheibenteile mit einer Schrägfläche versehen, die einen Winkel von 30 - 70° mit der Scheibenebene einschließt. Die Schrägfläche geht in den im Wesentlichen zylindrischen Abschnitt an der Peripherie der Adaptionsscheiben über bzw. grenzt an diesen zylindrischen Abschnitt an. Um stift- oder schraubenartige Verbindungselemente aufzunehmen, sind in den Adaptionsscheibenteilen Aufnahmebohrungen vorgesehen, die zumindest teilweise in der vorstehend definierten Schrägfläche münden. Eine Aufnahmebohrung ist als Sacklochbohrung und eine Aufnahmebohrung als Durchgangsbohrung ausgebildet, falls das Verbindungselement eine Schraube ist. Falls das Verbindungselement lediglich ein bolzenartiges Element ist, können beide Aufnahmebohrungen als Sacklochbohrungen ausgebildet sein.

An der Außenseite der Adaptionsscheiben oder Adaptionsscheibenteile ist ferner ein umlaufender Ringbund angeordnet, der als Abstands-Anlageelement zur Seitenflanke der Spannratsche dient.

Die Adaptionsscheiben können auf der Wickelwelle drehfest fixiert sein, was dadurch geschieht, dass sie entweder mit einer Nase in eine Ausnehmung der Wickelwelle eingreifen können oder auf der Peripherie der Wickelwelle durch gegenseitige Verschraubung fest verspannt sind.

Die Erfindung ist anhand von Ausführungsbeispielen in den Zeichnungsfiguren näher erläutert. Diese zeigen
Fig. 1 eine perspektivische Ansicht einer Spannratsche ohne aufgesetzte Adaptionsscheiben;
Fig. 2 eine Ansicht gemäß Fig. 1 mit zwei noch im getrennten Zustand befindlichen Adaptionsscheibenteilen;
Fig. 3 eine Ansicht gemäß Fig. 2, wobei eine Adaptionsscheibe bereits aufgesetzt ist;
Fig. 4 eine Draufsicht auf eine Spannratsche mit aufgesetzten Adaptionsscheiben;
Fig. 5 Ansichten einer Adaptionsscheibenhälfte einer ersten Stärke, nämlich
   a. Seitenansicht,
   b. Draufsicht,
   c. Querschnitt,
   d. Schnitt in Scheibenebene,
   e. perspektivisch;
Fig. 6 Ansichten einer Adaptionsscheibenhälfte, nämlich
   a. Seitenansicht,
   b. Draufsicht,
   c. Querschnitt,
   d. Schnitt in Scheibenebene,
   e. perspektivisch.

Die Spannratsche 1 zum Aufwickeln und Spannen eines lediglich angedeuteten Spanngurtes 2 besteht im Wesentlichen aus zwei Seitenteilen 3, an deren freien Ende 4 eine Handhabe 5 angeordnet ist. An dem der Handhabe 5 gegenüberliegenden Ende 6 ist eine Wickelwelle 7 angeordnet, auf die der Gurt 2 durch Bewegen der Handhabe 5 in Pfeilrichtung 8 aufgerollt werden kann. Im Bereich der Wickelwelle 7 ist ein Gesperre 9 angeordnet, das die Wickelwelle 7 bei Bewegung der Handhabe 5 in Pfeilrichtung 8 mitnimmt und das als Federrastgesperre wirkt, um eine Freigabe und Rückverdrehung der Wickelwelle 7 in Abwickelrichtung zu vermeiden, es sei denn, ein Sperrhebel 10 wird aus der Verzahnung des Federrastgesperres neu ausgehoben.

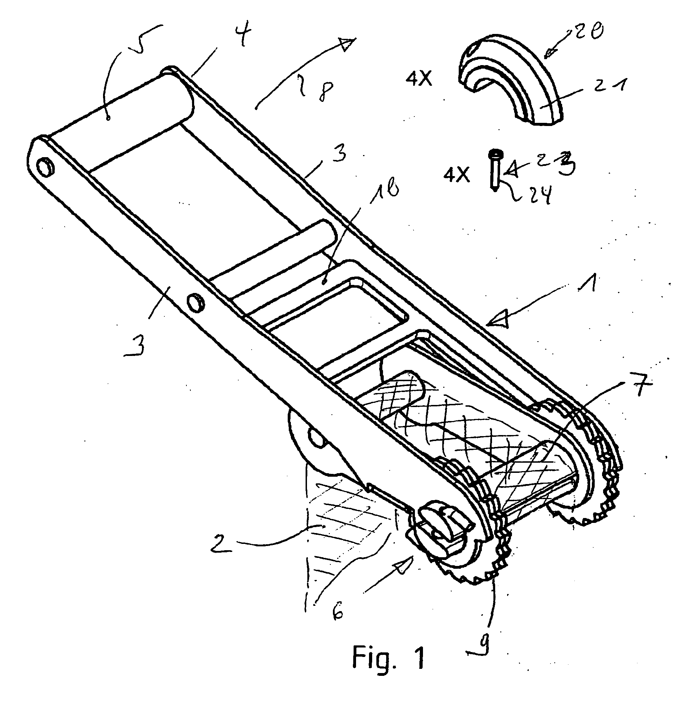

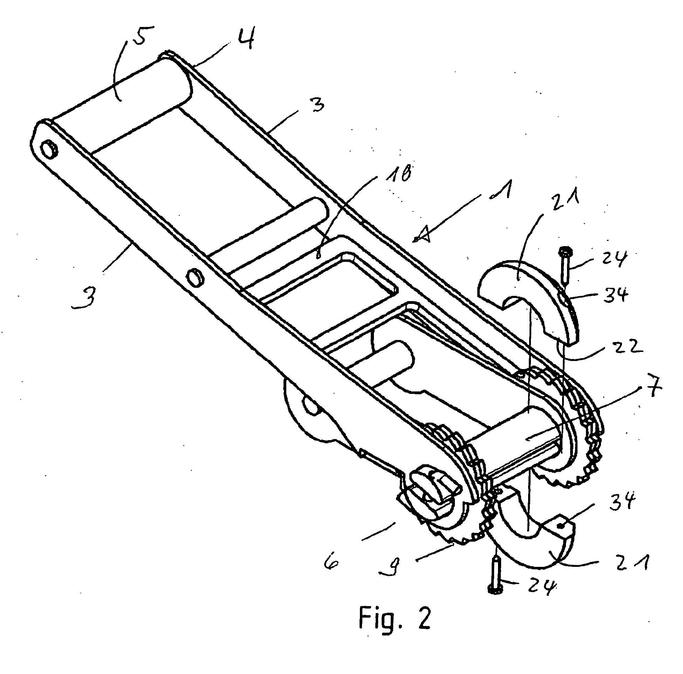

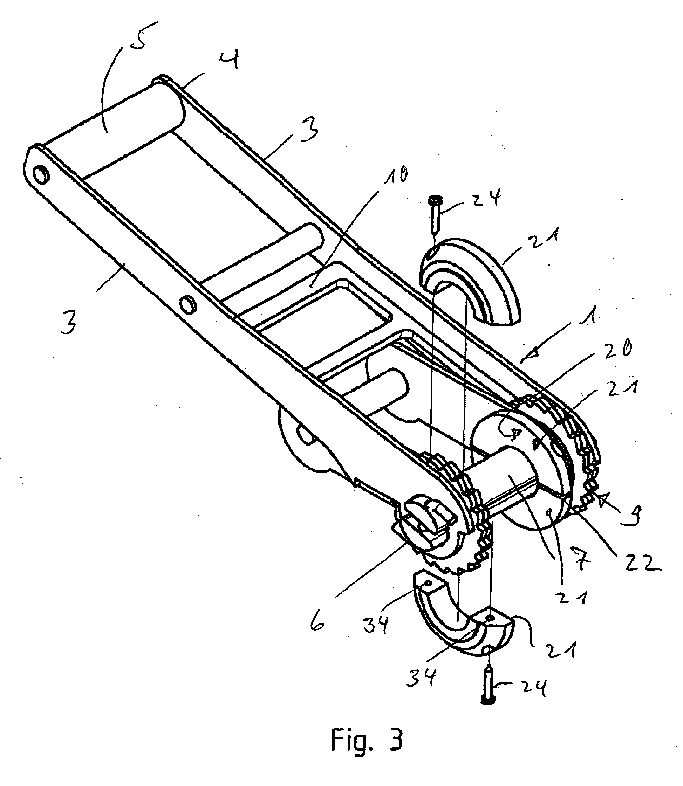

Weiterhin ist in Figur 1 eine Hälfte einer zweiteiligen Adaptionsscheibe 20 dargestellt, die mittels einer Verschraubung 23 mit einer weiteren Hälfte einer Adaptionsscheibe 20 auf die Wickelwelle 7 aufgebracht werden kann, wie dies aus den Figuren 2, 3 und 4 ersichtlich ist.

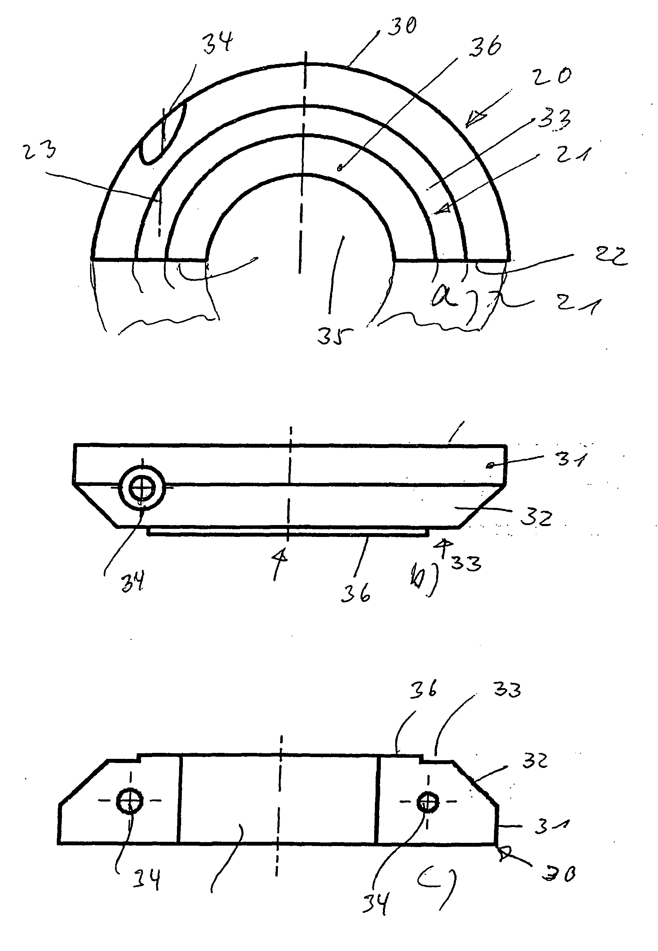

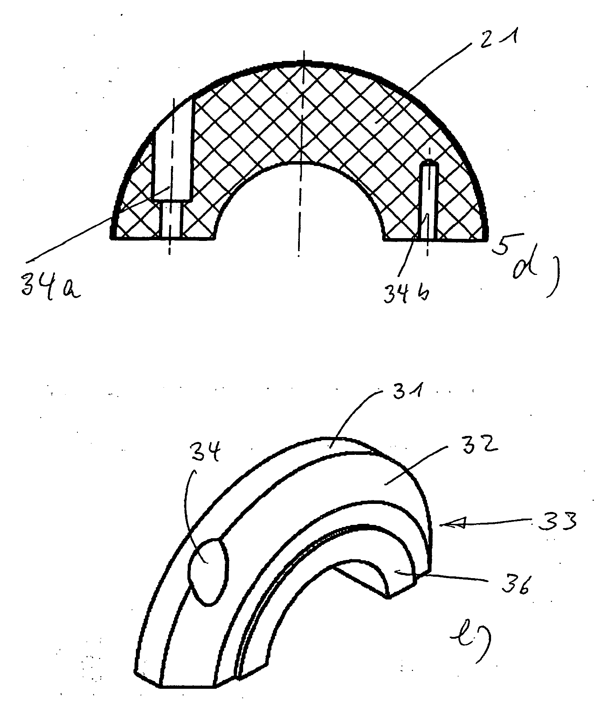

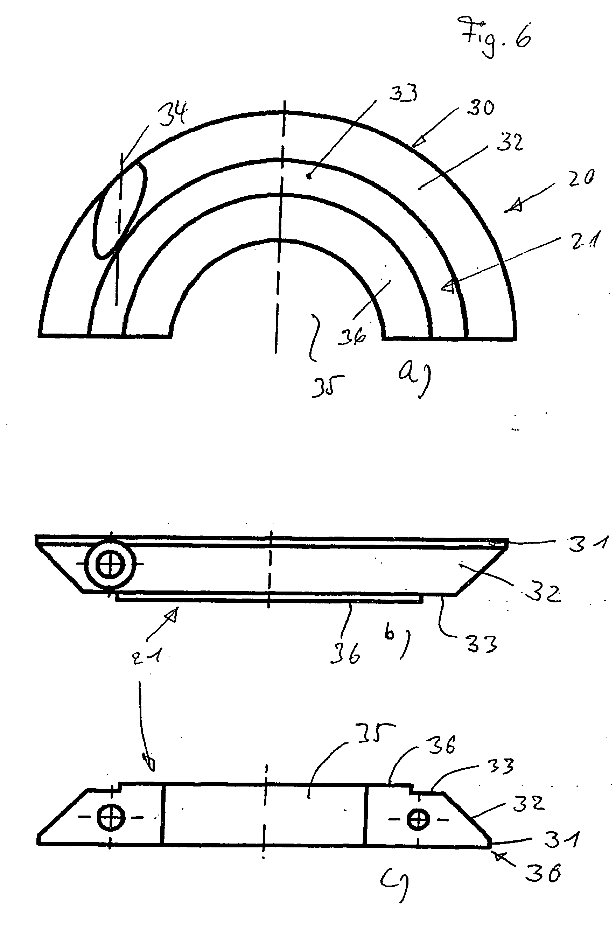

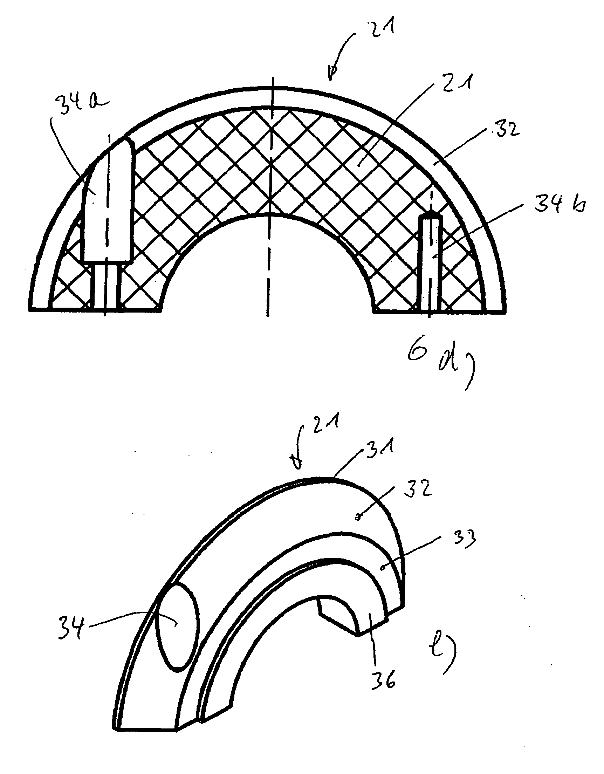

Die Adaptionsscheiben 20 sind insbesondere in Figuren 5 und 6 näher dargestellt. Die Adaptionsscheiben 20 bestehen aus Halbscheiben 21, die zwischen sich eine Trennfuge 22 bilden und mittels einer Verschraubung 23 aneinander befestigt sind. Die Schraubenelemente 24 der Verschraubung 23 verlaufen in Scheibenebene.

Anstelle der Schraubenelemente 24 können auch andere Verbindungselemente, z.B. Nut- und Federelemente, Keilverbindungselemente oder Formstifte vorgesehen werden, um eine Vorfixierung der Halbscheiben 21 zu gewährleisten.

Die Adaptionsscheiben 20 bzw. die Halbscheiben 21 weisen folgende Formmerkmale auf:

Beim dargestellten Ausführungsbeispiel sind die Halbscheiben 21 gleichsam halbmondförmig ausgebildet und weisen an ihrem äußeren Rand 30 einen im Wesentlichen zylindrischen Abschnitt 31 auf, der in eine Schrägfläche 32 übergeht, die der Außenseite 33 zugewandt ist. Die Schrägfläche 32 schließt beim dargestellten Ausführungsbeispiel einen Winkel von 45° mit der Scheibenebene ein. Die Adaptionsscheibenteile 21 (Halbscheiben) sind mit Aufnahmebohrungen 34 versehen, um die Verbindungselemente aufzunehmen. Die Aufnahmebohrungen 34 - soweit sie keine Sacklochbohrungen darstellen - münden in der zumindest bereichsweise in der Schrägfläche 32, bereichsweise in dem zylindrischen Abschnitt 31. In den Figuren 5d und 6d ist dargestellt, dass eine Aufnahmebohrung 34a eine Durchgangsbohrung und eine Aufnahmebohrung 34 als Sacklochbohrung 34b ausgeführt ist.

An der Außenseite 33 der zusammengefügten Adaptionsscheiben 20 ist ein umlaufender Ringbund 36 angeordnet.

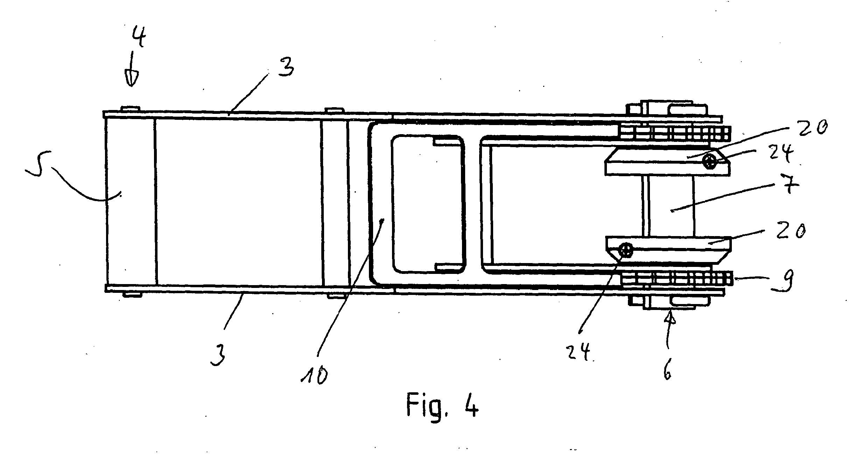

Bei dem in Figur 4 gezeigten Ausführungsbeispiel sind zwei Adaptionsscheiben 20 gegenüberliegend auf der Wickelwelle 7 montiert, die Montage kann eine drehfeste Montage auf der Wickelwelle 7 sein, sofern die Dimensionierungen des Wickelwellendurchmessers und die Ausnehmung 35 in den Halbscheiben 21 infolge eines gegenseitigen Anzugs der Verschraubung 23 dies zulassen.

## Patentansprüche

1. Spannratsche (1) zum Aufwickeln und Spannen eines Spanngurtes (2) zur Ladungsverzurrung oder einer bandartigen Slackline, wobei die Spannratsche (1) zur Anpassung an einen Gurt (2) mit einer Breite, die geringer ist als die Breite der Wickelwelle (7), und mit Adaptionsscheiben (20) versehen ist,
**dadurch gekennzeichnet, dass**
die Adaptionsscheiben (20) mehrteilig ausgebildet sind und im Bereich wenigstens einer Trennfuge (22) mit wenigstens einem in wenigstens eines der aneinander angelegten Adaptionsscheibenteile (21) eingreifenden Verbindungselement versehen sind.

2. Spannratsche nach Anspruch 1,
**dadurch gekennzeichnet, dass**
die Adaptionsscheiben (20) zweiteilig in Form zweier Halbscheiben (21) ausgebildet sind und die beiden Trennfugen (22) die Adaptionsscheiben (20) mittig durchsetzen.

3. Spannratsche nach Anspruch 2,
**dadurch gekennzeichnet, dass**
die Halbscheiben (21) durch eine Verschraubung (23) aneinander befestigt sind.

4. Spannratsche nach Anspruch 3,
**dadurch gekennzeichnet, dass**
die Schraubenelemente (24) der Verschraubung (23) in der Scheibenebene verlaufen.

5. Spannratsche nach einem der vorhergehenden Ansprüche,
**dadurch gekennzeichnet, dass**
die Verbindungselemente als Nut- und Federelemente, und/oder als Keilverbindung, und/oder als Formstifte ausgebildet sind.

6. Spannratsche nach einem der vorhergehenden Ansprüche,
**dadurch gekennzeichnet, dass**
die über die Verbindungselemente gegenseitig vorfixierten Adaptionsscheibenteile (21) durch eine die Adaptionsscheibenteile (21) zumindest teilweise umgreifende Federklammer aneinander befestigt sind und ein im Wesentlichen zylindrischer Abschnitt (31) an der Peripherie der Adaptionsscheiben (20) eine umlaufende Sicke für die Federklemme aufweist.

7. Spannratsche nach einem der vorhergehenden Ansprüche,
**dadurch gekennzeichnet, dass**
die Adaptionsscheiben (20) auf ihrer dem Gurt (2) in Endmontagestellung abgewandten Außenseite (33) mit einer Schrägfläche (32) versehen sind, die vorzugsweise einen Winkel von 30 - 70° mit der Scheibenebene einschließt.

8. Spannratsche nach Anspruch 7,
**dadurch gekennzeichnet, dass**
die Schrägfläche (32) in den im Wesentlichen zylindrischen Abschnitt (31) an der Peripherie der Adaptionsscheiben (20) übergeht.

9. Spannratsche nach einem der vorhergehenden Ansprüche,
**dadurch gekennzeichnet, dass**
die Adaptionsscheibenteile (21) mit Aufnahmebohrungen (34) für das wenigstens eine Verbindungselement versehen sind.

10. Spannratsche nach Anspruch 9
**dadurch gekennzeichnet, dass**
die Aufnahmebohrungen (34) teilweise in der Schrägfläche (32) münden.

11. Spannratsche nach Anspruch 9
**dadurch gekennzeichnet, dass**
wenigstens eine Aufnahmebohrung (34) in jedem Scheibenteil (21) als Sacklochbohrung ausgebildet ist.

12. Spannratsche nach Anspruch 9
**dadurch gekennzeichnet, dass**
jede Halbscheibe (21) eine Sacklochbohrung (34b) und eine Durchgangsbohrung (34a) aufweist.

13. Spannratsche nach einem der vorhergehenden Ansprüche,
**dadurch gekennzeichnet, dass**
an einer vom Gurt (2) in Endmontagestellung abgewandten Außenseite (33) der Adaptionsscheiben (20) ein umlaufender Ringbund (36) angeordnet ist.

14. Spannratsche nach einem der vorhergehenden Ansprüche,
**dadurch gekennzeichnet, dass**
die Adaptionsscheiben (20) auf der Wickelwelle (7) drehfest fixierbar, sind wobei die Drehfixierung der Adaptionsscheiben (20) durch gegenseitige Verspannung der Adaptionsscheibenteile (21) und einen dadurch bewirkten Klemmsitz auf der Wickelwelle (7) erfolgt.

15. Mehrteilige Adaptionsscheibe (20) zur Verwendung in einer Spannratsche (1) zum Aufwickeln und Spannen eines Spanngurtes (2) zur Ladungsverzurrung oder einer bandartigen Slackline, wobei die Adaptionsscheibenteile (21) auf die Wickelwelle (7) einer unzerlegten Spannratsche (1) gem. einem der Ansprüche 1-14 aufgesetzt und dort in gegenseitiger Verbindung mit Klemmsitz befestigt sind.

## Claims

1. Ratchet tensioner (1) for winding up and tensioning a tensioning belt (2) for securing loads or a tape-like slackline, wherein the ratchet tensioner (1), for adapting to a belt (2), is provided with a width which is smaller than the width of the winding shaft (7), and with adaptation discs (20),
**characterized in that**
the adaptation discs (20) are configured with multiple parts, and in the region of at least one separation joint (22) are provided with at least one connection element which engages in at least one of the adaptation disc parts (21), which are positioned against one another.

2. Ratchet tensioner according to Claim 1,
**characterized in that**
the adaptation discs (20) are configured with two parts in the shape of two half-discs (21) and the two separation joints (22) pass through the centre of the adaptation discs (20).

3. Ratchet tensioner according to Claim 2,
**characterized in that**
the half-discs (21) are fastened to one another by a screw connection (23).

4. Ratchet tensioner according to Claim 3,
**characterized in that**
the screw elements (24) of the screw connection (23) extend in the disc plane.

5. Ratchet tensioner according to one of the preceding claims,
**characterized in that**
the connection elements are configured as groove and tongue elements and/or as a keyed joint and/or as square pins.

6. Ratchet tensioner according to one of the preceding claims,
**characterized in that**
the adaptation disc parts (21), which are pre-attached to one another by the connection elements, are fastened to one another by a spring clamp which at least partially encompasses the adaptation disc parts (21), and a substantially cylindrical section (31) on the periphery of the adaptation discs (20) has an encircling bead for the spring clamp.

7. Ratchet tensioner according to one of the preceding claims,
**characterized in that**
on their outer side (33), which in the definitively assembled state is remote from the belt (2), the adaptation discs (20) are provided with an inclined surface (32), which preferably forms an angle of 30 - 70° with the disc plane.

8. Ratchet tensioner according to Claim 7,
**characterized in that**
the inclined surface (32) merges into the substantially cylindrical section (31) on the periphery of the adaptation discs (20).

9. Ratchet tensioner according to one of the preceding claims,
**characterized in that**
the adaptation disc parts (21) are provided with receiving bores (34) for the at least one connection element.

10. Ratchet tensioner according to Claim 9,
**characterized in that**
the receiving bores (34) partly open out into the inclined surface (32).

11. Ratchet tensioner according to Claim 9,
**characterized in that**
at least one receiving bore (34) in each disc part (21) is configured as a blind hole bore.

12. Ratchet tensioner according to Claim 9,
**characterized in that**
each half-disc (21) has one blind hole bore (34b) and one through-bore (34a).

13. Ratchet tensioner according to one of the preceding claims,
**characterized in that**
an encircling annular shoulder (36) is located on an outer side (33) of the adaptation discs (20), this outer side in the definitively assembled state being remote from the belt (2).

14. Ratchet tensioner according to one of the preceding claims,
**characterized in that**
the adaptation discs (20) can be attached in a rotationally fixed manner to the winding shaft (7), wherein the rotational attachment of the adaptation discs (20) takes place by reciprocal bracing of the adaptation disc parts (21) and a resulting force fit on the winding shaft (7).

15. Multiple-part adaptation disc (20) for use in a ratchet tensioner (1) for winding up and tensioning a tensioning belt (2) for securing loads or a tape-like slackline, wherein the adaptation disc parts (21) are mounted on the winding shaft (7) of an undismantled ratchet tensioner (1) according to one of Claims 1 to 14 and are fastened there in a reciprocally connected manner by a force fit.

## Revendications

1. Tendeur à cliquet (1) pour enrouler et tendre une sangle (2) pour l'arrimage de charges, ou un slackline de type bande, le tendeur à cliquet (1) étant prévu pour être adapté à une courroie (2) ayant une largeur inférieure à la largeur de l'arbre d'enroulement (7) et étant pourvu de disques d'adaptation (20),
**caractérisé en ce que**
les disques d'adaptation (20) sont réalisés en plusieurs parties et sont pourvus, dans la région d'au moins un joint de séparation (22), d'au moins un élément de liaison venant en prise dans au moins l'une des parties de disques d'adaptation (21) appliquées les unes contre les autres.

2. Tendeur à cliquet selon la revendication 1,
**caractérisé en ce que**
les disques d'adaptation (20) sont réalisés en deux parties sous forme de deux demi-disques (21) et les deux joints de séparation (22) traversent les disques d'adaptation (20) en leur centre.

3. Tendeur à cliquet selon la revendication 2,
**caractérisé en ce que**
les demi-disques (21) sont fixés l'un à l'autre par un vissage (23).

4. Tendeur à cliquet selon la revendication 3,
**caractérisé en ce que**
les éléments de vis (24) du vissage (23) s'étendent dans le plan des disques.

5. Tendeur à cliquet selon l'une quelconque des revendications précédentes,
**caractérisé en ce que**
les éléments de liaison sont réalisés sous forme d'éléments à rainure et languette, et/ou sous forme de connexion par clavetage, et/ou sous forme de rivets.

6. Tendeur à cliquet selon l'une quelconque des revendications précédentes,
**caractérisé en ce que**
les parties de disques d'adaptation (21) préfixées mutuellement par le biais des éléments de liaison sont fixées les unes aux autres par une pince à ressort venant en prise au moins en partie autour des parties de disques d'adaptation (21), et une portion essentiellement cylindrique (31) sur la périphérie des disques d'adaptation (20) présente une moulure périphérique pour la pince à ressort.

7. Tendeur à cliquet selon l'une quelconque des revendications précédentes,
**caractérisé en ce que**
les disques d'adaptation (20) sont pourvus sur leur côté extérieur (33) opposé à la courroie (2) dans la position de montage final d'une surface oblique (32) qui forme de préférence un angle de 30 - 70° avec le plan des disques.

8. Tendeur à cliquet selon la revendication 7,
**caractérisé en ce que**
la surface oblique (32) se prolonge dans la portion essentiellement cylindrique (31) sur la périphérie des disques d'adaptation (20).

9. Tendeur à cliquet selon l'une quelconque des revendications précédentes,
**caractérisé en ce que**
les parties des disques d'adaptation (21) sont pourvues d'alésages de réception (34) pour l'au moins un élément de liaison.

10. Tendeur à cliquet selon la revendication 9,
**caractérisé en ce que**
les alésages de réception (34) débouchent en partie dans la surface oblique (32).

11. Tendeur à cliquet selon la revendication 9,
**caractérisé en ce**
**qu'**au moins un alésage de réception (34) est réalisé dans chaque partie de disque (21) sous forme d'alésage à trou borgne.

12. Tendeur à cliquet selon la revendication 9,
**caractérisé en ce que**
chaque demi-disque (21) présente un alésage à trou borgne (34b) et un alésage traversant (34a).

13. Tendeur à cliquet selon l'une quelconque des revendications précédentes,
**caractérisé en ce**
**qu'**un épaulement annulaire (36) périphérique est disposé sur un côté extérieur (33) des disques d'adaptation (20) opposé à la courroie (2) dans la position de montage final.

14. Tendeur à cliquet selon l'une quelconque des revendications précédentes,
**caractérisé en ce que**
les disques d'adaptation (20) peuvent être fixés de manière solidaire en rotation sur l'arbre d'enroulement (7), la fixation en rotation des disques d'adaptation (20) s'effectuant par serrage mutuel des parties de disques d'adaptation (21) et par un ajustement par serrage associé en conséquence sur l'arbre d'enroulement (7).

15. Disque d'adaptation en plusieurs parties (20) pour l'utilisation dans un tendeur à cliquet (1) pour enrouler et tendre une sangle (2) pour l'arrimage de charges, ou un slackline de type bande, les parties des disques d'adaptation (21) étant posées sur l'arbre d'enroulement (7) d'un tendeur à cliquet (1) selon l'une quelconque des revendications 1 à 14 non divisé et étant fixées sur celui-ci par une connexion mutuelle avec un ajustement par serrage.
